(19) **Europäisches Patentamt**

**European Patent Office**

**Office européen des brevets**

(11) **EP 0 943 834 B1**

(12) **EUROPÄISCHE PATENTSCHRIFT**

(45) Veröffentlichungstag und Bekanntmachung des Hinweises auf die Patenterteilung:
**31.07.2002 Patentblatt 2002/31**

(51) Int Cl.$^7$: **F16F 3/02**

(21) Anmeldenummer: **99103666.6**

(22) Anmeldetag: **25.02.1999**

(54) **Dynamisches System mit einem Aktuator zur dynamischen Anregung einer Struktur und Verfahren zur Vergrösserung der dabei erzielbaren dynamischen Verformung der Struktur**

Dynamic system with an actuator for dynamic excitation of a structure and method for enlarging the dynamic deformation achievable therewith

Systéme dynamique avec un actionneur pour la stimulation dynamique d'une structure et méthode pour agrandir la déformation dynamique obtenable de la structure

(84) Benannte Vertragsstaaten:
**DE FR GB IT**

(30) Priorität: **05.03.1998 DE 19809545**

(43) Veröffentlichungstag der Anmeldung:
**22.09.1999 Patentblatt 1999/38**

(73) Patentinhaber: **Deutsches Zentrum für Luft- und Raumfahrt e.V.**
**51147 Köln (DE)**

(72) Erfinder:
• **Büter, Andreas Dipl.-Ing.**
**38102 Braunschweig (DE)**
• **Breitbach, Elmar Prof. Dr.-Ing.**
**37075 Göttingen (DE)**

(74) Vertreter: **Patentanwälte Rehberg + Hüppe**
**Postfach 31 62**
**37021 Göttingen (DE)**

(56) Entgegenhaltungen:
**EP-A- 0 127 741        EP-A- 0 391 066**
**DE-C- 19 509 485**

**Beschreibung**

Dynamisches System mit einem Aktuator zur dynamischen Anregung einer Struktur und Verfahren zur Vergrößerung der dabei erzielbaren dynamischen Verformung der Struktur

Die Erfindung bezieht sich auf ein dynamisches System mit einer elastisch verformbaren, eine Struktursteifigkeit aufweisenden Struktur um mit einem eine Eigensteifigkeit aufweisenden Aktuator, der zur dynamischen Anregung der Struktur in einem begrenzten Frequenzbereich über ein eine Übertragungssteifigkeit aufweisendes Übertragungselement vorgesehen ist. Weiterhin bezieht sich die Erfindung auf ein Verfahren zur Vergrößerung der in einem solchen dynamischen System durch den Aktuator erzielbaren dynamischen Verformung der Struktur.

Bei dem Übertragungselement kann es sich um eine Wegübersetzung für einen Stellweg des Aktuators handeln.

Typischerweise ist ein dynamisches System der eingangs beschriebenen Art neben den vier angesprochenen Steifigkeiten durch zwei Massen beschreibbar, wobei eine Masse $m_1$ zwischen einer über die Eigensteifigkeit des Aktuators $c_{akt}$ an eine ruhende Basis und über die Übertragungssteifigkeit $c_{Hebel}$ an eine zweite Masse $m_2$ angekoppelt ist und wobei die zweite Masse $m_2$ andererseits über die Struktursteifigkeit $c_s$ an die Basis angekoppelt ist.

Bei einem dynamischen System der eingangs beschriebenen Art wird die bei einer bestimmten Ansteuerung des Aktuators auf eine Längenänderung erreichbare Strukturverformung zum einen durch die Struktursteifigkeit, die der Verformung der Struktur unmittelbar entgegenwirkt, und zum anderen durch die Übertragungssteifigkeit, die für eine den Stellweg des Aktuators teilweise aufzehrende Elastizität steht oder dynamisch betrachtet eine Schwingungsdämmung darstellt, beschränkt.

Aus der EP 0 127 741 A1 ist ein Federungssystem für ein Kraftfahrzeug bekannt, bei dem einer mechanischen Feder eine magnetische Korrekturfeder parallel geschaltet ist, die eine negative Steifigkeit in einem Nulldurchgang ihrer Federkennlinie aufweist. Mit der negativen Steifigkeit kann die positive Steifigkeit der mechanischen Feder des Federungssystems lokal kompensiert werden, so daß lokal eine sehr weiche Federung für das Kraftfahrzeug erreicht wird. Die EP 0 127 741 A1 beschreibt auch einen konkreten Aufbau einer magnetischen Korrekturfeder mit Permanentmagneten an zwei sich einander gegenüberliegenden Bauteilen, wobei die Bauteile in einer Bewegungsrichtung relativ zueinander geführt sind und wobei sich in dem Nulldurchgang der Federkennlinie der Korrekturfeder gleichnamige magnetische Pole an den beiden Bauteilen gegenüberliegen.

In der DE 195 41 600 C1 wird eine weitere konkrete Anwendungsmöglichkeit der aus der EP 0 127 741 A1 bekannten Korrekturfeder mit negativer Steifigkeit beschrieben. Es handelt sich um die weiche Federung der Wippe eines Stromabnehmers für ein schnelles Schienenfahrzeug. Aus der DE 195 41 600 C1 gehen weiterhin verschiedene Wegübersetzungen für den Federweg einer Korrekturfeder mit negativer Steifigkeit hervor, um den effektiven Federweg der Korrekturfeder zu vergrößern.

Der Erfindung liegt die Aufgabe zugrunde, ein dynamisches System und ein Verfahren der eingangs beschriebenen Art aufzuzeigen, mit denen zumindest in einem begrenzten Frequenzbereich sehr große dynamische Verformungen der Struktur gemessen an der Ansteuerung des Aktuators erzielbar sind.

Erfindungsgemäß wird diese Aufgabe bei einem dynamischen System der eingangs beschriebenen Art dadurch gelöst, daß eine eine negative Steifigkeit in einem Nulldurchgang Ihrer Federkennlinie aufweisende Korrekturfeder derart vorgesehen ist, daß damit eine Resonanzfrequenz des dynamischen Systems auf den begrenzten Frequenzbereich abstimmt ist. Entsprechend wird bei dem Verfahren der eingangs beschriebenen Art die erfindungsgemäße Aufgabe dadurch gelöst, daß mit einer eine negative Steifigkeit in einem Nulldurchgang Ihrer Federkennlinie aufweisenden Korrekturfeder eine Resonanzfrequenz des dynamischen Systems auf den begrenzten Frequenzbereich abgestimmt wird.

Es ist bekannt, daß Anregungen eines dynamischen Systems mit einer Resonanzfrequenz des dynamischen Systems zu besonders großen Verformungen führen. Dieser Effekt wird durch die Korrekturfeder mit der negativen Steifigkeit ausgenutzt, um den Wirkungsgrad des Aktuators zu verbessern. Dabei ist zu beachten, daß die Korrekturfeder in ihrem Nulldurchgang das statische Kräftegleichgewicht des dynamischen Systems unbeeinflußt läßt. Gleichzeitig ist von Bedeutung, daß die negative Steifigkeit aller bekannten Korrekturfedern auf einen bestimmten Arbeitsbereich um den Nulldurchgang ihrer Federkennlinie beschränkt ist. Dies hat den Vorteil, daß die erfindungsgemäße Abstimmung der Resonanzfrequenz des dynamischen Systems auf den begrenzten Frequenzbereich zunehmend verlorengeht, wenn die Verformungen der Struktur diesen Arbeitsbereich verlassen. Es entsteht daher kein unkontrollierter Zustand der Struktur. Vielmehr kann durch eine Wegübersetzung für den Arbeitsbereich der Korrekturfeder eine Obergrenze für die dynamischen Verformungen der Struktur definiert werden.

Die Korrekturfeder kann für die erfindungsgemäße Abstimmung einerseits der Struktur und andererseits dem Aktuator und dem Übertragungselement parallel geschaltet werden. Es ist auch die Aufteilung der Korrekturfeder in zwei Teilkorrekturfedern möglich, von denen die eine Teilkorrekturfeder der Struktur und die andere Teilkorrekturfeder dem Aktuator und dem Übertragungselement parallel geschaltet wird.

Im Fall eines dynamischen Systems, das neben den vier Steifigkeiten einschließlich der negativen Steifigkeit der Korrekturfeder durch zwei Massen beschreibbar, d.h. idealisierbar, ist, wobei eine Masse $m_1$ über die Eigensteifigkeit des Aktuators $c_{akt}$ an eine ruhende Basis und über die Übertragungssteifigkeit $c_{Hebel}$ an eine zweite Masse $m_2$ angekoppelt ist und wobei die zweite Masse $m_2$ über die Struktursteifigkeit $c_s$ und die negative Steifigkeit $c_{S,neg}$ an die Basis angekoppelt ist, sollte die negative Steifigkeit $c_{S,neg}$ gemäß der nachstehenden Formel I festgelegt werden:

$$c_{S,neg} = C^2_{Hebel}/[(c_{Hebel}+c_{akt})-w^2 m_1] - [(c_{Hebel}+c_s)-w^2 m_2] \qquad (I),$$

wobei $w$ eine Frequenz aus dem begrenzten Frequenzbereich ist. Diese Festlegung von $c_{S,neg}$ entspricht der Abstimmung der ersten Eigenfrequenz des dynamischen Systems auf die Frequenz $w$.

Insbesondere, wenn die Struktur zwar immer nur über einen kleinen Frequenzbereich oder gar mit einer festen Frequenz angeregt werden soll, sich der Frequenzbereich aber verschiebt, ist es sinnvoll, eine Einstelleinrichtung für die negative Steifigkeit der Korrekturfeder vorzusehen, um die negative Steifigkeit der Korrekturfeder zur Abstimmung einer Resonanzfrequenz des dynamischen Systems auf den jeweiligen Frequenzbereich der Anregung vorzunehmen.

Die bekannten Korrekturfedern mit negativer Steifigkeit sind zur Verwendung bei der Erfindung grundsätzlich geeignet. Um eine Einstelleinrichtung für die negative Steifigkeit der Korrekturfeder zu realisieren ist es aber sinnvoll, zumindest die magnetischen Pole an einem Bauteil der konkreten Korrekturfeder mit Hilfe von Elektromagneten auszubilden, die aber durchaus auch mit Permanentmagneten an demselben Bauteil kombiniert sein können. Die Elektromagnete ermöglichen eine Einstellung der magnetischen Feldstärke der magnetischen Pole und damit der resultierenden negativen Steifigkeit der Korrekturfeder.

Das Übertragungselement des dynamischen Systems ist vorzugsweise eine Wegübersetzung für einen Verstellweg des Aktuators. Eine solche Wegübersetzung ist bei vielen bekannten Aktuatoren notwendig, um Verformungen der Struktur in relevanter Größenordnung zu erzielen, auch wenn die Erfindung zur Anwendung kommt. Bei der Erfindung kann das Übertragungselement grundsätzlich aber auch als einfache Feder-Masse-Anordnung ausgebildet sein.

Die Erfindung wird im folgenden anhand von Ausführungsbeispielen näher erläutert und beschrieben. Dabei zeigt

Figur 1    einen ersten prinzipiellen Aufbau des dynamischen Systems,

Figur 2    einen zweiten prinzipiellen Aufbau des dynamischen Systems,

Figur 4    den Aufbau einer Korrekturfeder in dem dynamischen System gemäß Figur 1 oder 2 in einem Längsschnitt,

Figur 5    die Korrekturfeder gemäß Figur 4 in einer Draufsicht und

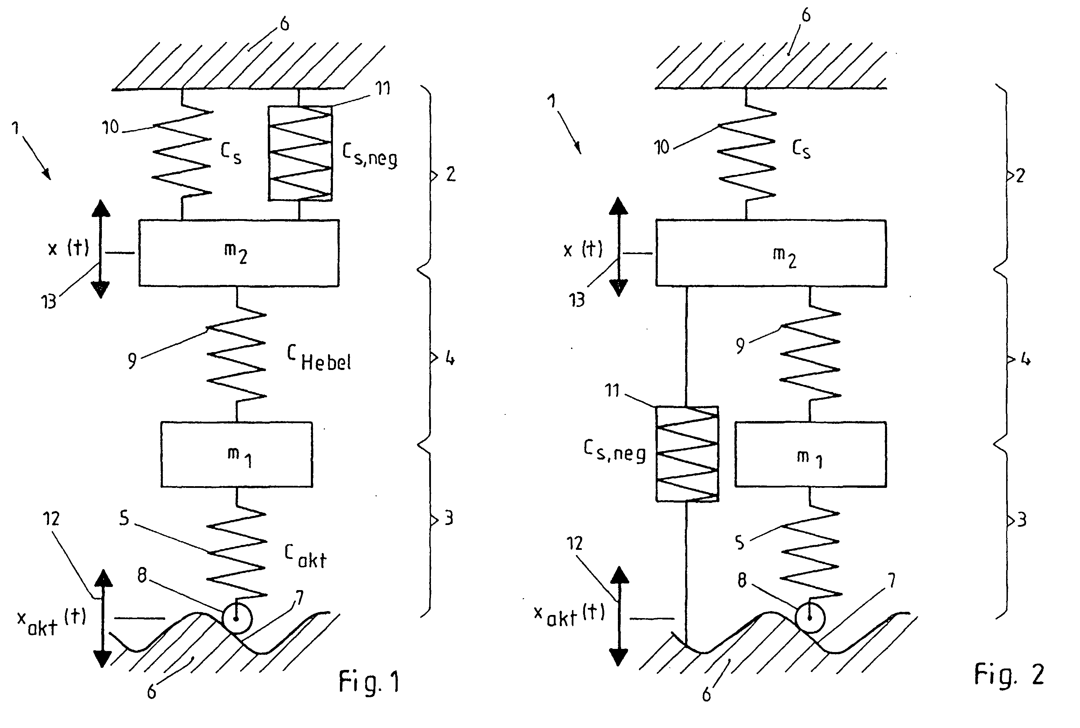

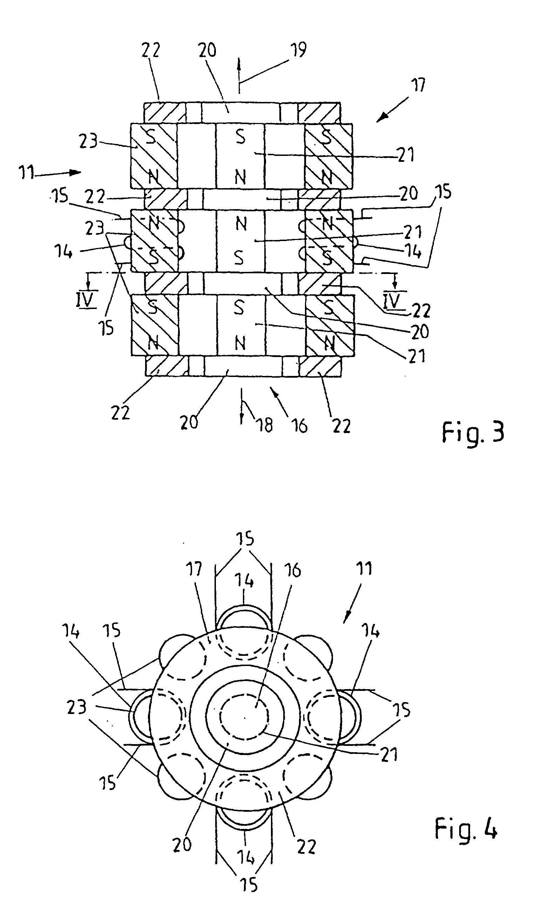

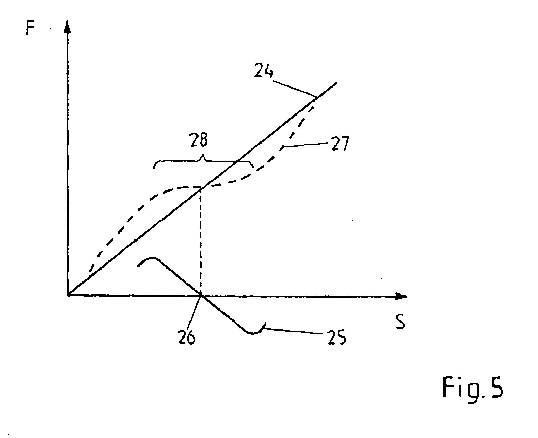

Figur 3    die Federkennlinie der Korrekturfeder gemäß den Figuren 4 und 5 im Vergleich zu der Federkennlinie der Struktur des dynamischen Systems gemäß der Figur 1 bzw. 2.

Figur 1 zeigt ein Ersatzschaltbild für ein dynamisches System 1. Das dynamische System besteht aus einer Struktur 2, einem Aktuator 3 und einer Wegübersetzung 4. Beschrieben wird der Aktuator 3 in dem Ersatzschaltbild durch eine Teil einer Masse $m_1$, die über eine Feder 5 mit der Eigensteifigkeit des Aktuators $c_{akt}$ an ein Basis 6 angekoppelt ist. Dabei weist ein über eine wellenförmige Oberfläche 7 abrollendes Laufrad 8 auf eine periodische Längenveränderung des Aktuators 3 hin. Auf der anderen Seite ist die Masse $m_1$, die teilweise auch der Wegübersetzung 4 zuzurechnen ist, über eine Feder 9 mit der Übertragungssteifigkeit $c_{Hebel}$ der Wegübersetzung 4 an eine Masse $m_2$ angekoppelt. Die Masse $m_2$ entspricht teilweise der Masse der Wegübersetzung 4, im wesentlichen jedoch der Masse der Struktur 2. Die Masse $m_2$ ist über eine Feder 10 mit der Struktursteifigkeit $c_s$ und über eine hierzu parallel geschaltete Korrekturfeder 11 mit einer negativen Steifigkeit $c_{S,neg}$ wiederum an die Basis 6 angekoppelt. Bei diesem Ersatzschaltbild entspricht die Lageänderung des Laufrads über der Zeit $x_{akt}(t)$ in Richtung eines Doppelpfeils 12 der Längenänderung des Aktuators 3, während die Verschiebung der Masse $m_2$ über der Zeit $x(t)$ in Richtung des Doppelpfeils 13 für die dynamische Verformung der Struktur 2 steht. Für eine bestimmte Anregungsfrequenz $w$, mit der die Längenänderung $x_{akt}$ der Aktuators 3 erfolgt, gilt:

$$x/x_{akt}=c_{akt}/[[(c_{S,neg}+c_s+c_{Hebel})-w^2 m_2][(c_{Hebel}+c_{akt})-w^2 m_1]+c^2_{Hebel}]$$

In dem dynamischen System ist die Korrekturfeder 11 so ausgelegt, daß $c_{S,neg}$ der nachstehenden Gleichung

I gehorcht:

$$c_{S,neg} = C^2_{Hebel}/[(c_{Hebel}+c_{akt})-w^2 m_1] - [(c_{Hebel}+c_s)-w^2 m_2] \qquad (I).$$

So gilt, daß das Verhältnis $x/x_{akt}$ theoretisch unendlich wird. Praktisch wird es jedoch durch auftretende Dämpfungen des dynamischen Systems 1 und durch den begrenzten Bereich der Federlinie der Korrekturfeder 11 mit der negativen Steifigkeit $c_{S,neg}$ beschränkt. Hierauf wird noch näher im Zusammenhang mit Figur 5 eingegangen werden.

Das dynamische System gemäß Figur 2 unterscheidet sich von dem dynamischen System gemäß Figur 1 nur darin, daß die Korrekturfeder 11 parallel zu den Federn 5 und 9 zwischen der Masse $m_2$ und der Basis 6 vorgesehen ist und nicht parallel zu der Feder 10. Dies hat bei identischer Ausbildung der Federn jedoch keinen Einfluß auf die bei dem dynamischen System 1 erzielbaren dynamischen Verformungen x(t) der Struktur 2 durch den Aktuator 3.

Die in den Figuren 3 und 4 gezeigte Korrekturfeder 11 weist zwei Bauteile 16 und 17 auf, wobei das Bauteil 16 relativ zu dem Bauteil 17 in Richtung der Pfeile 18 und 19 verschieblich geführt ist. Das Bauteil 16 weist Permanentmagnete 21 auf, die unter Zwischenordnung von Weicheisenzwischenstücken 20 mit gleichnamigen Polen aneinanderliegend in Reihe geschaltet sind. Das ringförmig um das Bauteil 16 angeordnete Bauteil 17 weist Permanentmagnete 23 auf, die ebenfalls unter Zwischenordnung von Weicheisenzwischenstücken 22 mit gleichnamigen Polen aneinanderliegend in Reihe geschaltet sind. Allerdings sind zwischen zwei ringförmig ausgebildeten Weicheisenzwischenstücken 22 jeweils mehrere Permanentmagnete 23 angeordnet. Aus Figur 3 ist die Relativstellung der Bauteile 16 und 17 der Korrekturfeder 11 zu entnehmen, die dem Nulldurchgang ihrer Federkennlinie entspricht, bei dem sie die negative Steifigkeit $c_{S,neg}$ aufweist. Diesem Nulldurchgang liegen sich die Weicheisenzwischenstücke 20 und 22 gegenüber, aus denen in radialer Richtung entgegengesetzte magnetische Feldlinien austreten. Das heißt, die Weicheisenzwischenstücke 20 und 22 stoßen sich ab. Durch die Führung der Bauteile 16 und 17 ist aber nur eine Bewegung senkrecht zu den in der Stellung gemäß Figur 3 auftretenden Abstoßungskräften möglich. Es herrscht also labiles ein Gleichgewicht. Sobald dieses labile Gleichgewicht durch eine Relativbewegung der Bauteile 16 und 17 verlassen wird, wird diese Relativbewegung durch die auftretenden Abstoßungskräfte tendenziell vergrößert. Die Größe der Abstoßungskräfte ist bei der Korrekturfeder 11 gemäß den Figuren 3 und 4 durch Spulen 14 veränderbar, die um einige Permanentmagnete 23 gewickelt sind. Über Anschlüsse 15 sind die Spulen 14 an eine Gleichstromquelle einer hier weiter nicht dargestellten Einstelleinrichtung für die negative Steifigkeit $c_{S,neg}$ der Korrekturfeder 11 anschließbar. Die Spulen 14 bilden bei Durchfluß eines Stroms einen Elektromagneten aus, dessen magnetisches Feld dem magnetischen Feld des Permanentmagneten, um den die Spule 14 gewickelt ist, überlagert ist. Durch unterschiedliche Ströme durch die Spule 14 ist daher die negative Steifigkeit $c_{S,neg}$ der Korrekturfeder 11 gemäß den Figuren 3 und 4 einstellbar.

In Figur 5 sind verschiedene Federkennlinien, d. h. Weg-Kraft-Verläufe von Federn des dynamischen Systems 1 gemäß Figur 1 oder 2 dargestellt. Eine Federkennlinie 24 entspricht der Feder 10 mit der Struktursteifigkeit $c_s$. Eine Federkennlinie 25 mit negativer Steigung, d. h. Steifigkeit $c_{S,neg}$ in ihrem Nulldurchgang 26 ist die Federkennlinie der Korrekturfeder 11. Die gestrichelte Federkennlinie 27 steht für die Überlagerung der Federkennlinien 24 und 25 und weist darauf hin, wie in einem Arbeitsbereich 28 um den Nulldurchgang 26 herum die effektive Steifigkeit der Struktur 2 durch die Korrekturfeder 11 erheblich verändert werden kann. Diese Veränderung wird bei dem dynamischen System gemäß Figur 1 oder 2 dazu genutzt, eine Resonanzfrequenz auf die jeweils interessierende Anregungsfrequenz *w* des Aktuators abzustimmen. Aus Figur 5 geht weiterhin hervor, daß die negative Steifigkeit $c_{S,neg}$ auf den Arbeitsbereich 28 beschränkt ist. Dies bedeutet, daß die Abstimmung der Korrekturfeder gemäß der obigen Formel I zwar theoretisch zu einem unendlichen Verhältnis von $x/x_{akt}$ führt, aber tatsächlich die Verformungen der Struktur im wesentlichen auf den Arbeitsbereich 28 beschränkt bleiben. Der Arbeitsbereich 28 selbst kann durch den Aufbau der Korrekturfeder 11 oder auch durch geeignete Wegübersetzungen variiert werden.

<u>BEZUGSZEICHENLISTE</u>

1 - dynamisches System
2 - Struktur
3 - Aktuator
4 - Wegübersetzung
5 - Feder
6 - Basis
7 - Oberfläche
8 - Laufrad

9 -    Feder
10 -    Feder

11 -    Korrekturfeder
12 -    Doppelpfeil
13 -    Doppelpfeil
14 -    Spule
15 -    Anschluß
16 -    Bauteil
17 -    Bauteil
18 -    Pfeil
19 -    Pfeil
20 -    Weicheisenzwischenstück

21 -    Permanentmagnet
22 -    Weicheisenzwischenstück
23 -    Permanentmagnet
24 -    Federkennlinie
25 -    Federkennlinie
26 -    Nulldurchgang
27 -    Federkennlinie
28 -    Arbeitsbereich

**Patentansprüche**

1.  Dynamisches System (1) mit einer elastisch verformbaren, eine Struktursteifigkeit aufweisenden Struktur (2) und mit einem eine Eigensteifigkeit ($c_{akt}$) aufweisenden Aktuator (3), der zur dynamischen Anregung der Struktur (1) in einem begrenzten Frequenzbereich über ein eine eine Übertragungssteifigkeit ($c_{Hebel}$) aufweisendes Übertragungselement (4) vorgesehen ist, **dadurch gekennzeichnet, daß** eine eine negative Steifigkeit ($c_{S,neg}$) in einem Nulldurchgang (26) ihrer Federkennlinie (25) aufweisende Korrekturfeder (11) derart vorgesehen ist, daß damit eine Resonanzfrequenz des dynamischen Systems (1) auf den begrenzten Frequenzbereich abstimmt ist.

2.  Dynamisches System nach Anspruch 1, **dadurch gekennzeichnet, daß** die Korrekturfeder (11) der Struktur (2) einerseits und/oder dem Aktuator (3) und dem Übertragungselement (4) andererseits parallel geschaltet ist.

3.  Dynamisches System nach Anspruch 1 oder 2, das neben den vier Steifigkeiten durch zwei Massen beschreibbar ist, wobei eine Masse $m_1$ zwischen einer über die Eigensteifigkeit des Aktuators $c_{akt}$ an eine ruhende Basis und über die Übertragungssteifigkeit $c_{Hebel}$ an eine zweite Masse $m_2$ angekoppelt ist und wobei die zweite Masse $m_2$ über die Struktursteifigkeit $c_s$ und die negative Steifigkeit $c_{S,neg}$ der Korrekturfeder an die Basis angekoppelt ist, **dadurch gekennzeichnet, daß** die negative Steifigkeit $c_{S,neg}$ gemäß der nachstehenden Formel (I) festgelegt ist:

$$c_{S,neg} = C^2_{Hebel}/[(c_{Hebel}+c_{akt})-w^2m_1] - [(c_{Hebel}+c_s)-w^2m_2] \qquad (I),$$

wobei *w* eine Frequenz aus dem begrenzten Frequenzbereich ist.

4.  Dynamisches System nach einem der Ansprüche 1 bis 3, **dadurch gekennzeichnet, daß** eine Einstelleinrichtung für die negative Steifigkeit ($s_{S,neg}$) der Korrekturfeder (11) vorgesehen ist.

5.  Dynamisches System nach einem der Ansprüche 1 bis 4, **dadurch gekennzeichnet, daß** das Übertragungselement (4) eine Wegübersetzung für einen Verstellweg des Aktuators (3) ist.

6.  Verfahren zur Vergrößerung der in einem dynamischen System in einem begrenzten Frequenzbereich durch einen Aktuator erzielbaren dynamischen Verformung einer Struktur, wobei die elastisch verformbare Struktur eine Struktursteifigkeit und der Aktuator eine Eigensteifigkeit aufweist und wobei der Aktuator über ein eine Übertragungssteifigkeit aufweisendes Übertragungselement an der Struktur angreift, **dadurch gekennzeichnet, daß** mit einer eine negative Steifigkeit ($c_{S,neg}$) in einem Nulldurchgang (26) ihrer Federkennlinie (25) aufweisenden Korrekturfeder (11) eine Resonanzfrequenz des dynamischen Systems (1) auf den begrenzten Frequenzbereich abgestimmt wird.

7. Verfahren nach Anspruch 6, **dadurch gekennzeichnet, daß** die Korrekturfeder (11) der Struktur (2) einerseits und/oder dem Aktuator (3) und dem Übertragungselement (4) andererseits parallel geschaltet wird.

8. Verfahren nach Anspruch 6 oder 7, wobei das Dynamische System neben den vier Steifigkeiten durch zwei Massen beschrieben wird, wobei eine Masse $m_1$ zwischen einer über die Eigensteifigkeit des Aktuators $c_{akt}$ an eine ruhende Basis und über die Übertragungssteifigkeit $c_{Hebel}$ an eine zweite Masse $m_2$ angekoppelt ist und wobei die zweite Masse $m_2$ über die Struktursteifigkeit $c_s$ und die negative Steifigkeit $c_{S,neg}$ der Korrekturfeder an die Basis angekoppelt ist, **dadurch gekennzeichnet, daß** die negative Steifigkeit $c_{S,neg}$ gemäß der nachstehenden Formel (I) festgelegt wird:

$$c_{S,neg} = C^2_{Hebel}/[(c_{Hebel}+c_{akt})-w^2 m_1] - [(c_{Hebel}+c_s)-w^2 m_2] \qquad (I),$$

wobei $w$ eine Frequenz aus dem begrenzten Frequenzbereich ist.

9. Verfahren nach einem der Ansprüche 6 bis 8, **dadurch gekennzeichnet, daß** mit sich änderndem Frequenzbereich die Steifigkeit ($c_{S,neg}$) der Korrekturfeder (11) verändert wird.

10. Verfahren nach einem der Ansprüche 6 bis 9, **dadurch gekennzeichnet, daß** mit dem Übertragungselement (4) ein Verstellweg des Aktuators (3) übersetzt wird.

## Claims

1. Dynamic system (1) comprising an elastically deformable structure (2) having a structure stiffness and an actuator (3) having an own stiffness ($c_{act}$), which is provided for dynamically exciting the structure (1) in a limited frequency region via a transfer element (4) having a transfer stiffness ($c_{lever}$), **characterized in that** a correction spring having a negative stiffness ($c_{S,neg}$) in a cross over point (26) of its spring characteristic (25) is provided in such a way that a resonant frequency of the dynamic system (1) is tuned to the limited frequency region.

2. Dynamic system according to claim 1, **characterized in that** the correction spring (11) is arranged in parallel to the structure, on the one hand, and/or to the actuator (3) and the transfer element (4), on the other hand.

3. Dynamic system according to claim 1 or 2 which can be described by means of two masses besides the four stiffnesses, one mass $m_1$ being coupled via the own stiffness of the actuator $c_{act}$ to a resting basis and via the transfer stiffness $C_{lever}$ to a second mass $m_2$, and the second mass $m_2$ being coupled via the structure stiffness $c_S$ and the negative stiffness $c_{S,neg}$ of the correction spring to the basis, **characterized in that** the negative stiffness $c_{S,neg}$ is determined by the following formula (I)

$$c_{s,neg} = c^2_{lever}/[(c_{lever} + c_{act})-w^2 m_2]-[(c_{lever}+ c_s)-w^2 m_2] \qquad (I),$$

wherein $w$ is a frequency of the limited frequency region.

4. Dynamic system according to any of the claims 1 to 3, **characterized in that** an adjustment device is provided for the negative stiffness ($c_{S,neg}$) of the correction spring (11).

5. Dynamic system according to any of the claims 1 to 4, **characterized in that** the transfer element (4) is a displacement increasing ratio for the displacement of the actuator (3).

6. Method of enlarging the dynamic deformation of a structure available in a limited frequency region by means of an actuator, the elastically formable deformable structure having a structure stiffness and the actuator having an own stiffness, and the actuator engaging the structure via a transfer element having a transfer stiffness, **charac-**

**terized in that** a resonant frequency of the dynamic system (1) is tuned to the limited frequency region by means of a correction spring (11) having a negative stiffness ($c_{S,neg}$) in a cross over point (26) of its spring characteristic (25).

7. Method according to claim 6, **characterized in that** the correction spring (11) is arranged in parallel to the structure (2), on the one hand, and/or to the actuator (3) and the transfer element (4), on the other hand.

8. Method according to claim 6 or 7, wherein the system is determined by two masses besides the four stiffnesses, one mass $m_1$ being coupled via the own stiffness of the actuator $c_{act}$ to a resting basis and via the transfer stiffness $c_{lever}$ to a second mass $m_2$, and the second mass $m_2$ being coupled via the structure stiffness $c_S$ and the negative stiffness $c_{S,neg}$ of the correction spring to the basis, **characterized in that** the negative stiffness $c_{S,neg}$ is determined by the following formula (I)

$$c_{s,neg} = c^2_{lever}/[(c_{lever} + c_{act})\text{-}w^2 m_2] \text{-} [(c_{lever} + c_s)\text{-}w^2 m_2] \qquad (I),$$

wherein $w$ is a frequency of the limited frequency region.

9. Method according to any of the claims 6 to 8, **characterized in that** the stiffness ($c_{S,neg}$) of the correction spring (11) is modified with a modified frequency region.

10. Method according to any of the claims 6 to 9, **characterized in that** a displacement of the actuator (3) is increased by means of the transfer element (4).

## Revendications

1. Système dynamique (1) comportant une structure (2) déformable élastiquement et présentant une rigidité structurelle, ainsi qu'un actionneur (3) qui présente une rigidité propre $c_{akt}$ et qui est prévu pour l'excitation dynamique de la structure (1) dans une gamme de fréquences limitée, à travers un élément de transmission (4) qui présente une rigidité de transmission $c_{Hebel}$, **caractérisé en ce qu'**il est prévu un ressort de correction (11), qui présente une rigidité négative $c_{s,neg}$ à un passage par zéro (26) de sa courbe caractéristique (25), de manière à accorder ainsi une fréquence de résonance du système dynamique (1) sur la gamme de fréquences limitée.

2. Système dynamique selon la revendication 1, **caractérisé en ce que** le ressort de correction (11) est monté en parallèle d'une part à la structure (2) et/ou d'autre part à l'actionneur (3) et à l'élément de transmission (4).

3. Système dynamique selon la revendication 1 ou 2, qui, outre les quatre rigidités, peut être défini par deux masses, une masse $m_1$ étant accouplée, par la rigidité propre de l'actionneur $c_{akt}$, à une base au repos et, par la rigidité de transmission $c_{Hebel}$, à une deuxième masse $m_2$, et la deuxième masse $m_2$ étant accouplée à la base, par la rigidité structurelle $c_s$ et la rigidité négative $c_{s,neg}$ du ressort de correction, **caractérisé en ce que** la rigidité négative $c_{s,neg}$ est définie suivant la formule (I) suivante :

$$c_{s,neg} = c^2_{Hebel}/[(c_{Hebel} + c_{akt}) \text{-} w^2 m_1] \text{-} [(c_{Hebel} + c_s) \text{-} w^2 m_2] \qquad (I)$$

$w$ étant une fréquence de la gamme de fréquences limitée.

4. Système dynamique selon l'une des revendications 1 à 3, **caractérisé en ce qu'**il est prévu un dispositif de réglage pour la rigidité négative $c_{s,neg}$ du ressort de correction (11).

5. Système dynamique selon l'une des revendications 1 à 4, **caractérisé en ce que** l'élément de transmission (4) est une transmission de course pour une course de réglage de l'actionneur (3).

6. Procédé pour augmenter la déformation dynamique d'une structure, qui peut être obtenue dans un système dynamique, dans une gamme de fréquences limitée, au moyen d'un actionneur, la structure déformable élastiquement présentant une rigidité structurelle et l'actionneur une rigidité propre, et l'actionneur agissant sur la structure, par l'intermédiaire d'un élément de transmission qui présente une rigidité de transmission, **caractérisé en ce qu'**au moyen d'un ressort de correction (11), qui présente une rigidité négative $c_{s,neg}$ au passage par zéro (26) de sa courbe caractéristique (25), on accorde une fréquence de résonance du système dynamique (1) sur la gamme de fréquences limitée.

7. Procédé selon la revendication 6, **caractérisé en ce que** le ressort de correction (11) est monté en parallèle d'une part à la structure (2) et/ou d'autre part à l'actionneur (3) et à l'élément de transmission (4).

8. Procédé selon la revendication 6 ou 7, dans lequel le système dynamique est défini, outre par les quatre rigidités, par deux masses, une masse $m_1$ étant accouplée, par la rigidité propre de l'actionneur $c_{akt}$, à une base au repos et, par la rigidité de transmission $c_{Hebel}$, à une deuxième masse $m_2$, et la deuxième masse $m_2$ étant accouplée à la base, par la rigidité structurelle $c_s$ et la rigidité négative $c_{s,neg}$ du ressort de correction, **caractérisé en ce que** la rigidité négative $c_{s,neg}$ est définie suivant la formule (I) suivante :

$$c_{s,neg} = c^2_{Hebel}/[(c_{Hebel} + c_{akt}) - w^2 m_1] - [(c_{Hebel} + c_s) - w^2 m_2] \qquad (I)$$

$w$ étant une fréquence de la gamme de fréquences limitée.

9. Procédé selon l'une des revendications 6 à 8, **caractérisé en ce que** lorsque la gamme de fréquences varie, on fait varier la rigidité $c_{s,neg}$ du ressort de correction (11).

10. Procédé selon l'une des revendications 6 à 9, **caractérisé en ce qu'**au moyen de l'élément de transmission (4), on transmet une course de réglage de l'actionneur (3).

Fig. 1

Fig. 2

Fig. 3

Fig. 4

Fig. 5